# EUROPEAN PATENT APPLICATION

(11) **EP 4 319 459 A1**
(43) Date of publication of application: **07.02.2024**
(21) Application number: 21932873.9
(22) Date of filing: 22.03.2021
(51) Int. Cl.: H04W 76/16, H04W 84/18

(54) **WIRELESS COMMUNICATION NODE AND WIRELESS COMMUNICATION METHOD**

(71) Applicant: NTT DOCOMO, INC., Tokyo 100-6150 (JP)
(72) Inventor: KURITA Daisuke, Tokyo 100-6150 (JP); ECHIGO Haruhi, Tokyo 100-6150 (JP); YOSHIOKA Shohei, Tokyo 100-6150 (JP); KUMAGAI Shinya, Tokyo 100-6150 (JP); TAKAHASHI Yuki, Tokyo 100-6150 (JP); HOKAZONO Yuki, Tokyo 100-6150 (JP); NAGATA Satoshi, Tokyo 100-6150 (JP)
(74) Representative: Hoffmann Eitle
(86) International application number: PCT/JP2021/011805
(87) International publication number: WO 2022/201262

(57) **Abstract**

A radio communication node 100 includes a connection unit 130 capable of connecting with multiple radio communication nodes 100B, 100C having a same or different function or role, and controls connection performed by the connection unit 130.

## Description

### Technical Field

The present disclosure relates to a radio communication node and a radio communication method.

### Background Art

The 3rd Generation Partnership Project (3GPP) specifies the 5th generation mobile communication system (also called 5G, New Radio (NR), or Next Generation (NG)) and is also preparing a next generation specification called Beyond 5G, 5G Evolution, or 6G.

For example, in 6G, various use cases such as higher required performance, ultra-coverage extension and ultra-long-distance communication, ultra-reliable communication, virtual cell (user centric no cell), flexible networks (NW), and mesh networks (mesh NW)/side links are presumed, and initial access also needs to be designed with these in mind (see Non-Patent Literature 1).

### Citation List

### Non-Patent Literature

Non-Patent Literature 1: NTT DOCOMO, INC., "DOCOMO 6G White Paper Version 3.0", [online], published in February 2021, Internet <URL: https://www.nttdocomo.co.jp/corporate/technology/whitepaper_6g/>

### Disclosure of the Invention

Thus, 6G requires further improvements in the reliability of radio links (RAN).

Therefore, the present invention has been made in view of such circumstances, and an object of the present invention is to provide a radio communication node and radio communication method capable of improving reliability by making a radio access network (RAN) a mesh type and thereby having a redundant configuration of radio links.

One aspect of the present disclosure includes a connection unit (NW IF unit 130) capable of connecting with a plurality of radio communication nodes (radio communication nodes 100) having the same or a different function or role, and a control unit (control unit 140) that controls connection performed by the connection unit (NW IF unit 130).

One aspect of the present disclosure includes a control step for controlling connection performed by a connection unit (NW IF unit 130) capable of connecting with a plurality of radio communication nodes (radio communication nodes 100) having the same or a different function or role, and a connection step for performing a connection with another radio communication node through connection control in the control step.

### Brief Description of Drawings

[FIG. 1] FIG. 1 is an overall schematic diagram of a radio communication system 10.
[FIG. 2] FIG. 2 is a diagram illustrating a typical configuration example of multiple radio communication nodes 100.
[FIG. 3] FIG. 3 is a functional block configuration diagram of a radio communication node 100.
[FIG. 4] FIG. 4 is a diagram illustrating a network configuration example for scenario 1-a.
[FIG. 5] FIG. 5 is a diagram illustrating a network configuration example for scenario 1-b.
[FIG. 6] FIG. 6 is a diagram illustrating a network configuration example for scenario 2.
[FIG. 7] FIG. 7 is a diagram illustrating a network configuration example for scenario 3.
[FIG. 8] FIG. 8 is a diagram illustrating links between communication nodes.
[FIG. 9] FIG. 9 is a diagram illustrating an example of a signal and data structure.
[FIG. 10] FIG. 10 is a diagram illustrating a signal and data structure in option 1-1.
[FIG. 11] FIG. 11 is a diagram illustrating a signal and data structure in option 1-2.
[FIG. 12] FIG. 12 is a diagram illustrating a signal and data structure in option 1-3.
[FIG. 13] FIG. 13 is a diagram illustrating a source node, a destination node, intermediate nodes, and, the correspondence between links thereof and a signal and data structure.
[FIG. 14] FIG. 14 is a diagram illustrating a configuration when node types in option 2-1 and option 2-2 are S: gNB (UE), D: UE (gNB), and I: IAB/gNB.
[FIG. 15] FIG. 15 is a diagram illustrating a configuration when node types are S: gNB, D: UE, and I: high-end UE.
[FIG. 16] FIG. 16 is a diagram illustrating a configuration when node types are S: UE, D: UE, and I: high-end UE.
[FIG. 17] FIG. 17 is a diagram illustrating a configuration when node types are S: UE, D: UE, and I: IAB/gNB.
[FIG. 18] FIG. 18 is a diagram illustrating a configuration example for method 1: node to node (each link).
[FIG. 19] FIG. 19 is a diagram illustrating a configuration example for method 2: source to destination (E2E).
[FIG. 20] FIG. 20 is a diagram illustrating a configuration example for method 3: gNB to node.
[FIG. 21] FIG. 21 is a diagram illustrating a hardware configuration example of a CU 50 and a radio communication node 100.

### Description of Embodiments

Embodiments will be described below with reference to the accompanying drawings. Note that the same or similar reference numerals have been attached to the same functions and configurations, and the description thereof is omitted as appropriate.

### (1) Overall schematic configuration of a radio communication system

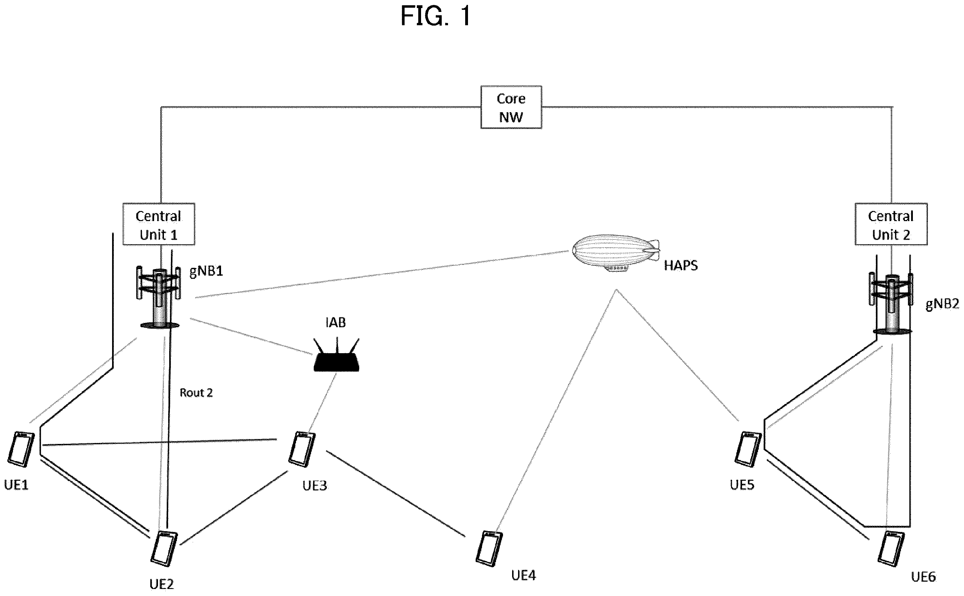

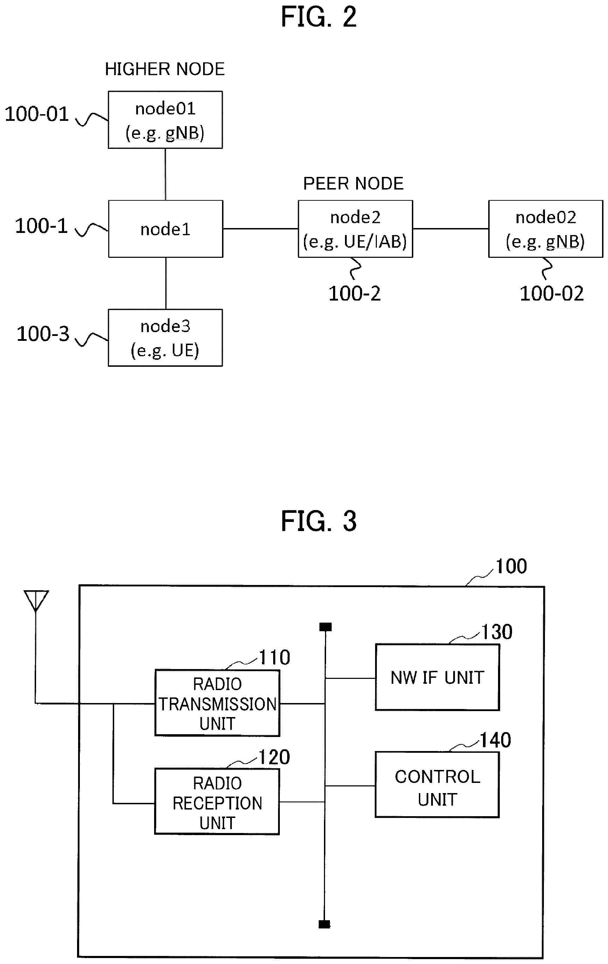

FIG. 1 is an overall schematic configuration diagram of a radio communication system 10 according to the present embodiment. The radio communication system 10 is a 5G New Radio (NR) or 6G compliant radio communication system and includes multiple radio communication nodes 100 (as illustrated in the figure, Central Units (CUs), base stations (gNBs), a High Altitude Platform Station (HAPS), an Integrated Access and Backhaul (IAB) node, terminals (UE: User Equipment), and the like can also be "radio communication nodes"). Here, Fig. 2 is a diagram illustrating a configuration example of a higher node, peer nodes, and a lower node.

As illustrated in Fig. 2 as an example, the radio communication system 10 includes a higher node 100-01, peer nodes 100-1, 100-2, and 100-02, and a lower node 100-3.

These radio communication nodes 100 can configure radio access with a UE and a radio backhaul (BH) between the radio communication nodes. Specifically, a backhaul (transmission path) using a radio link is configured between the radio communication node 100-1 and the radio communication node 100-01, and between the radio communication node 100-1 and the radio communication node 100-3.

The configuration in which radio access with a UE and a radio backhaul in the radio communication nodes are integrated is called Integrated Access and Backhaul (IAB) and can be included in a communication method according to the present embodiment. IAB reuses existing functions and interfaces defined for radio access. In particular, a Mobile-Termination (MT), a gNB-DU (Distributed Unit), a gNB-CU (Central Unit), a User Plane Function (UPF), an Access and Mobility Management Function (AMF), a Session Management Function (SMF), and corresponding interfaces such as NR Uu (between MT and gNB/DU), F1, NG, X2, and N4 are used as baselines.

The radio communication node 100 can be connected to an NR radio access network (NG-RAN) and core network (Next Generation Core (NGC) or 5GC) via a wired transmission path such as a fiber transport (see Fig. 1). An NG-RAN/NGC includes a Central Unit (CU), which is a communication node. Note that the NG-RAN and NGC may simply be referred to as a "network". Note that the CU may include any of or a combination of the UPF, AMF, and SMF described above. Alternatively, the CU may be a gNB-CU as described above.

Note that the direction from a higher node to a lower node (including a UE) is the DL direction, and the direction from a lower node to a higher node is the UL direction.

Note that a radio link established between the lower node 100-3 such as a UE and the peer node 100-1 or the higher node 100-01 is called a radio access link. Specifically, the radio links include DL Access in the DL direction and UL Access in the UL direction.

Note that the radio access link from the node 100-1 to the higher node 100-01 is called an uplink (UL), and the radio access link to the lower node 100-3 is called a downlink (DL), while the link from the node 100-1 to the peer node 100-2 or the peer node 100-02 is sometimes called a side link. By allowing multiple communication routes including a side link, the radio links can have redundancy.

For example, in the example in Fig. 1, a UE2 performs direct transmission and reception with a gNB and at the same time can perform communication in multiple links (for example, via a UE1, via IAB-UE3). Making the radio access network (RAN) a mesh network in this way provides redundancy and leads to improvement in reliability of communication, and this is the subject matter of the present embodiment.

More specifically, as illustrated in Fig. 2 as an example, the radio communication nodes 100 making up the mobile communication system according to the present embodiment are capable of communicating with multiple communication nodes 100 having a different or identical function. For example, a communication node (node 1) is capable of communicating with a node (node 01) corresponding to a base station, a node (node 3) corresponding to a mobile station, and a node (node 2) corresponding to a mobile station/IAB in simultaneous way/TDM/FDM/SDM (simultaneous way/time division multiplexing/frequency division multiplexing/space division multiplexing).

Each of the communication nodes 100 may be arranged in a hierarchy according to its function or communication method with a communication node (for example, gNB) serving as an originating point (for example, the number of communication nodes intervening between the gNB and itself). For example, when the node 1 is the originating point, the node 01 may be treated as a higher node and the node 2 and node 3 may be treated as lower nodes, or for example, the node 2 (in the case of a UE) connected to the gNB may be treated as a peer node.

The higher node is a node that performs the functions and roles of a source of signals and notifications related to synchronization and information related to control, a destination of an RRC connection, and the like. The lower node is a node that performs the functions and roles of a destination of signals and notifications related to synchronization and information related to control, of connecting using an RRC connection, and the like.

In the present embodiment, the radio access may be a half-duplex or a full-duplex.

### (2) Function block configuration of radio communication system

Next, the function block configuration of the radio communication node 100 included in the radio communication system 10 will be described.

### (2.1) Radio communication node 100

Fig. 3 is a functional block diagram of a radio communication node 100A constituting a parent node. As illustrated in Fig. 3, the radio communication node 100 includes a radio transmission unit 110, a radio reception unit 120, an NW IF unit 130, and a control unit 140.

The radio transmission unit 110 transmits a radio signal according to the specifications of 5G or 6G. The radio reception unit 120 also receives a radio signal according to the specifications of 5G or 6G. In the present embodiment, the radio transmission unit 110 and the radio reception unit 120 perform radio communication with other radio communication nodes 100.

The NW IF unit 130 is a connection unit capable of connecting with multiple radio communication nodes (including higher, lower, and peer nodes) having the same or a different function or role. The NW IF unit 130 provides a communication interface that realizes a connection to the NGC side or the like. For example, the NW IF unit 130 can include interfaces such as X2, Xn, N2, and N3.

The control unit 140 functions as a control unit that controls a connection by a connection unit such as the NW IF unit 130. Note that the control unit 140 is not limited to controlling the NW IF unit 130 of the radio communication node 100 thereof and may also control an NW IF unit 130 of another radio communication node 100. Conversely, the control unit 140 may have the NW IF unit 130 of the radio communication node 100 thereof controlled by another radio communication node 100.

Specifically, the control unit 140 may enable connection control from another specific radio communication node 100, or may enable connection control of all the other radio communication nodes 100 by the radio communication node 100 of the control unit 140.

The control unit 140 may also disable connection control from another specific radio communication node 100, or may disable connection control of each of the other radio communication nodes 100 by the radio communication node 100 of the control unit 140.

Note that the connection control method described above may be uniform regardless of the node shape or may be different depending on the node shape.

The target of connection control by the control unit 140 may be at least one of synchronization, connection type, identification, routing, and resource allocation. In addition, target links for control may be inter node, E2E, and the like.

Note that control information for another radio communication node 100 provided by the control unit 140 may be transmitted using an appropriate channel or signaling.

A channel includes a control channel and a data channel. The control channel includes a PDCCH (Physical Downlink Control Channel), a PUCCH (Physical Uplink Control Channel), a PRACH (Physical Random Access Channel), and a PBCH (Physical Broadcast Channel).

The data channel includes a PDSCH (Physical Downlink Shared Channel) and a PUSCH (Physical Uplink Shared Channel).

Note that a reference signal includes a Demodulation Reference Signal (DMRS), a Sounding Reference Signal (SRS), a Phase Tracking Reference Signal (PTRS), and a Channel State Information-Reference Signal (CSI-RS), and the signal includes a channel and a reference signal. Data may mean data transmitted via a data channel.

UCI is control information paired with Downlink Control Information (DCI) and is transmitted via a PUCCH or a PUSCH. UCI may include a Scheduling Request (SR), a Hybrid Automatic Repeat Request (HARQ) ACK/NACK, and a Channel Quality Indicator (CQI).

Note that examples of specific connection control will be described below. Note that the radio communication system 10, the radio communication node 100, the connection unit (NW IF unit 130), the control unit 140, and the like may use a known wired mesh network technology to make the radio communication network (RAN) a mesh type.

### (3) Operation and control method of radio communication system

Next, the operation and control method of the radio communication system 10 will be described. Specifically, an operation and control example between communication nodes 100 in the radio communication system 10 will be described.

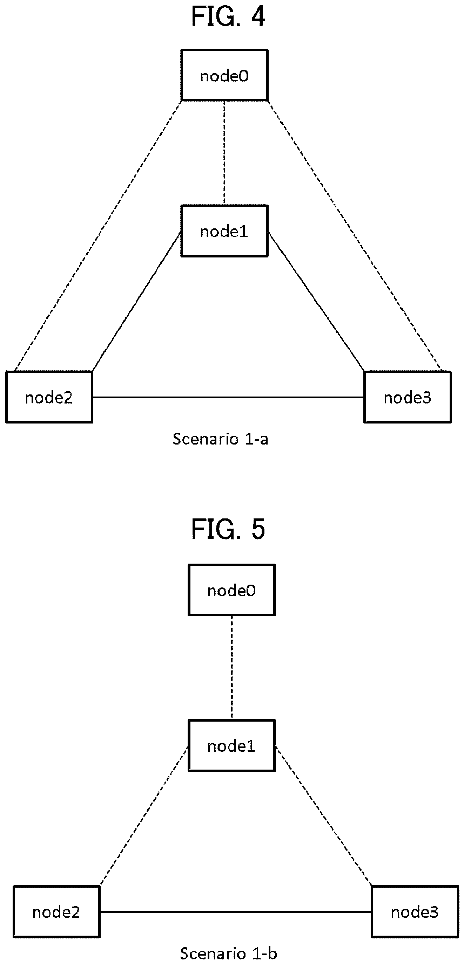

The following methods are considered for the operation and control of communication nodes. Figs. 4 to 7 illustrate control relationships between communication nodes in scenarios 1-a, 1-b, 2, and 3.

### (3.0) Examples of control relationships between communication nodes

### <Scenario 1>

As illustrated in Fig. 4, in this example of scenario 1, a specific node (in this example, node 0), such as a core NW/base station, can control all nodes, and all the nodes are controlled by a specific node. Dotted lines in the figure indicate links in which connection control information (signal) is transmitted between nodes.

In the example of scenario 1a in Fig. 4, nodes (node 1 to 3) that are the target of connection control reside in an area of a base station or the like, a specific node (node 0) transmits control information to each of the nodes (nodes 1 to 3), and each of the nodes (nodes 1 to 3) is subject to connection control by the specific node (node 0).

In an example of scenario 1b in Fig. 5, because nodes (nodes 1 to 3) that are the target of connection control do not reside in an area of a base station or the like, the specific node (node 0) and/or each node (nodes 1 to 3) relays a signal of the base station (node 0) or has a function corresponding to the base station (as in node 1).

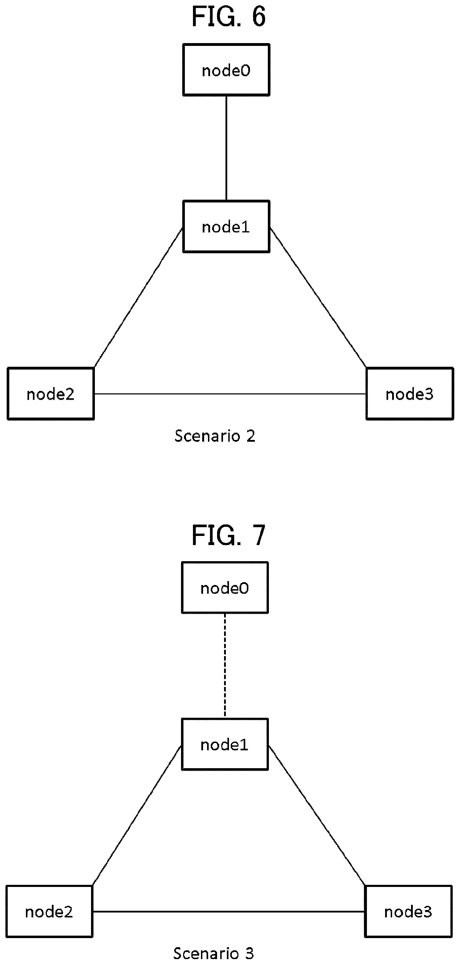

In an example of scenario 2 in Fig. 6, a specific node (node 0), such as a core NW/base station, disables control of each of the nodes (nodes 1 to 3), and each of the nodes is not controlled. Note that in this case, any one of the following options may be adopted. 2-a Each of the nodes autonomously controls itself, links between nodes, and the like.
2-b A node substituting for a base station is capable of controlling all the nodes or is controlled.

In an example of scenario 3 in Fig. 7, a mixture of scenario 1 and scenario 2 is allowed.

### (3.1) Details of scenario 1

Note that in scenario 1, a specific node such as a core NW/base station is capable of controlling all nodes, and each of the nodes is controlled. Each communication node may use the following means to perform control on a node that has a means of communicating with the core NW/base station.
1-a Connect directly with a core NW/base station.
1-b Connect with a node equivalent to a core NW/base station (for example, an IAB node).
1-b Connect indirectly with a core NW/base station (for example, connect with a node that relays a signal of the base station).

For the range controlled by the core NW/base station (for example, node 0), the following methods are considered.
Option 1-1: All is controlled by a core NW/base station.
Option 1-2: Part is controlled by a core NW/base station.
Option 1-3: Overall framework is controlled by a core NW/base station.

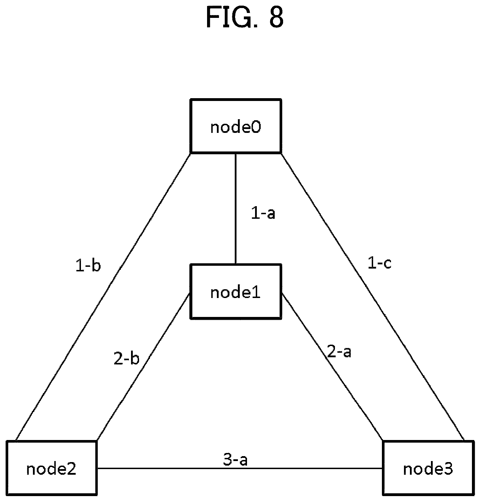

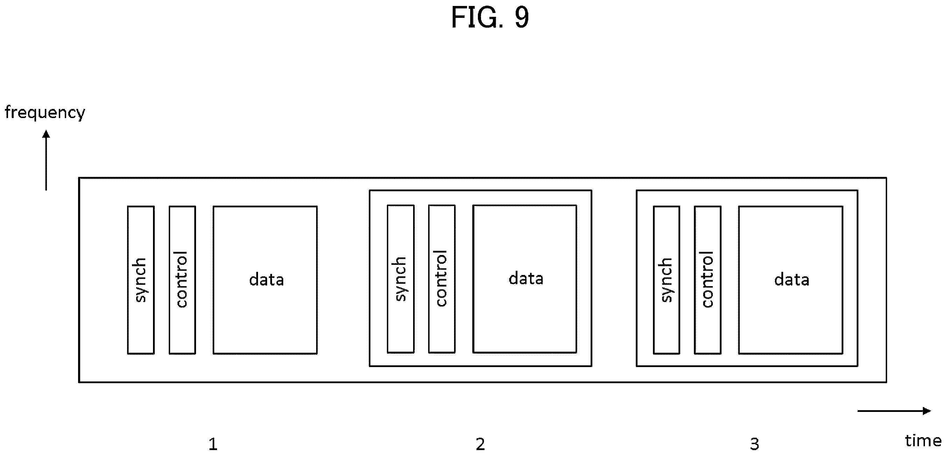

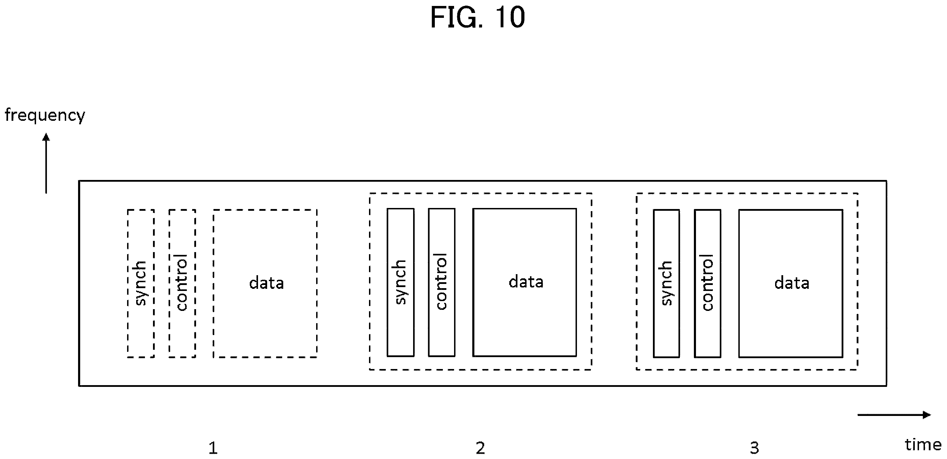

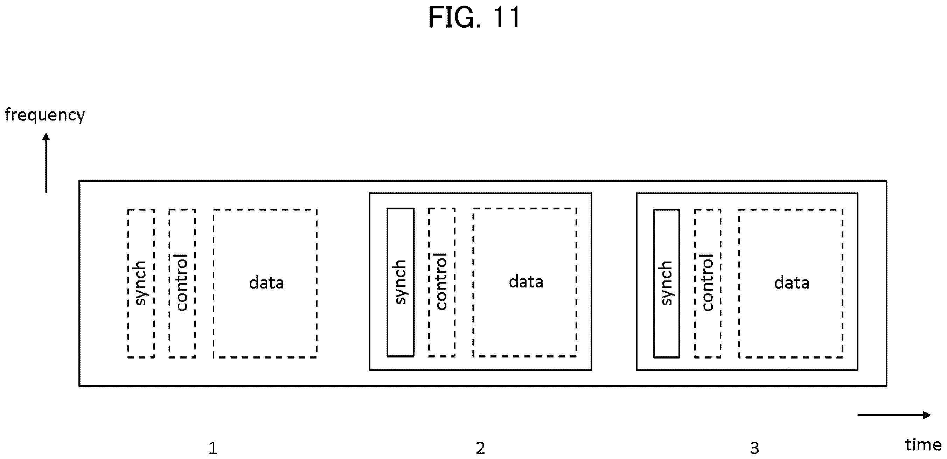

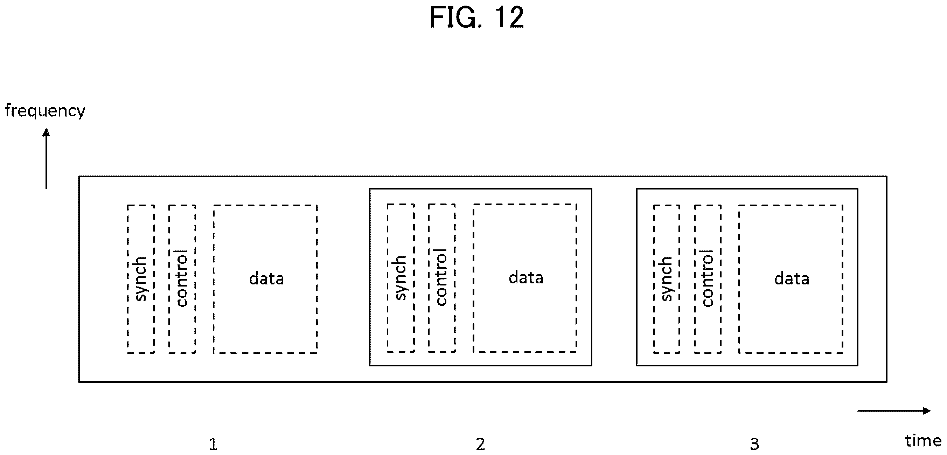

Here, Fig. 8 is a diagram illustrating links between communication nodes. Fig. 9 is a diagram illustrating an example signal/data structure. The following description is made using link names illustrated in Fig. 8. As illustrated in Fig. 9 as an example, signals and data to be transmitted are arranged chronologically in the order of a synchronization signal, control information, and data of a link 1 at the first stage (links 1-a, 1-b, and 1-c), a synchronization signal, control information, and data of a link 2 at the second stage (links 2-a and 2-b), and a link 3 at the third stage (link 3-a). Here, Fig. 10 illustrates the structure of signals and data in option 1-1. Fig. 11 illustrates the structure of signals and data in option 1-2. Fig. 12 illustrates the structure of signals and data in option 1-3. Solid lines indicate information that is rewritable by another radio communication node 100, and broken lines indicate information that is not rewritable by another radio communication node 100.

In option 1-1, since all is controlled by the core NW/base station (node 0), instructions and control of configurations and procedures required for communication using each link are all executed by the core NW/base station (node 0). For example, synchronization, scheduling, and resource control for each link are all controlled. Thus, as illustrated in Fig. 10, information of links 1 to 3 is all rewritable by another communication node (node 0) .

In option 1-2, part is controlled by the core NW/base station. That is, functions and roles that are controllable are distributed in the core NW/base station and each node. For example, the core NW/base station (node 0) performs control regarding synchronization, and each node may perform resource allocation for each link. As for the signal/data structure, some pieces of information (control information and the like) can be rewritten by another communication node (node 0), as illustrated in Fig. 11.

In option 1-3, the overall frame is controlled by the core NW/base station (node 0) as illustrated in Fig. 12. That is, overall frame control is performed, such as regarding the controllable range for each node. For example, the configuration of radio resources available for each node, and the like can be controlled.

### (3.2) Details of scenario 2

In scenario 2, a specific node, such as a core NW/base station, cannot control each node, and each node is not controlled. Here, one of the following options may be adopted.
2-a Each node autonomously controls itself and links between nodes and the like.
2-b A node substituting for a base station can control all nodes, and each node is controlled (the range of control is equivalent to that of scenario 1 above).

Here, the following methods may be adopted as a mechanism for controlling each link.
Option 2-1: Control methods and mechanisms are uniform regardless of the function or type of the node to be connected.
Option 2-2: Control methods and mechanisms are different depending on the function or type of the node to be connected.

For example, in option 2-2, control methods and mechanisms can be made different depending on the node function or type of signal/data source and destination. Examples of a source node and a destination node include gNB, a high-end UE, and a low-end UE. Here, a low-end UE is a terminal having only the function of communicating with a base station, for example. A high-end UE is, for example, a terminal having inter-terminal communication and relay functions in addition to the above.

Also, an intermediate node (for example, an IAB node or high-end UE) can be interposed between a source node and a destination node. In this case, control methods and mechanisms can be made different depending on the type of intermediate node.

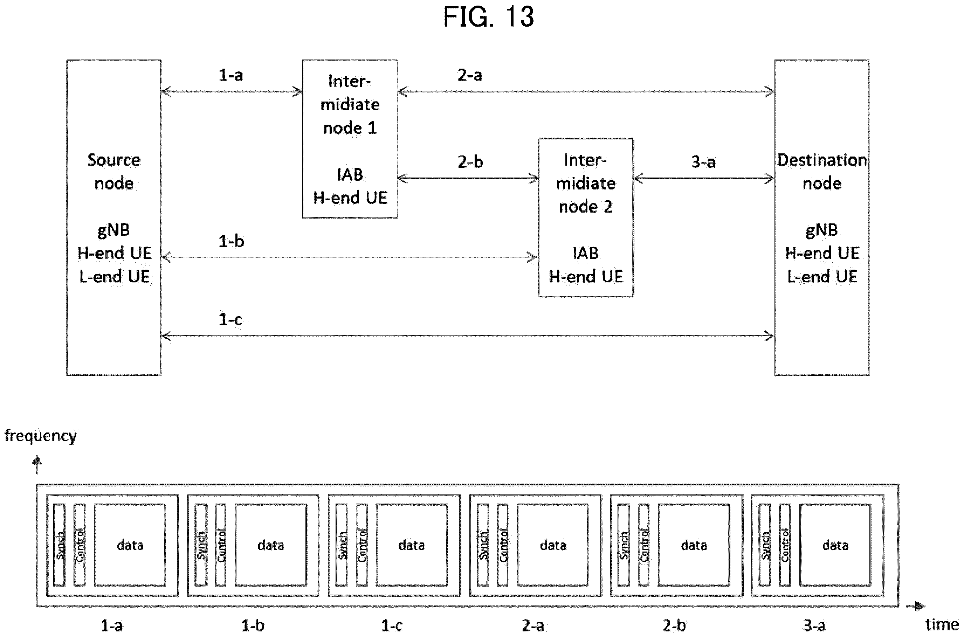

Control mechanisms for each link will be described below. Fig. 13 illustrates a source node, a destination node, intermediate nodes, and the correspondence between links thereof and signal/data structures.

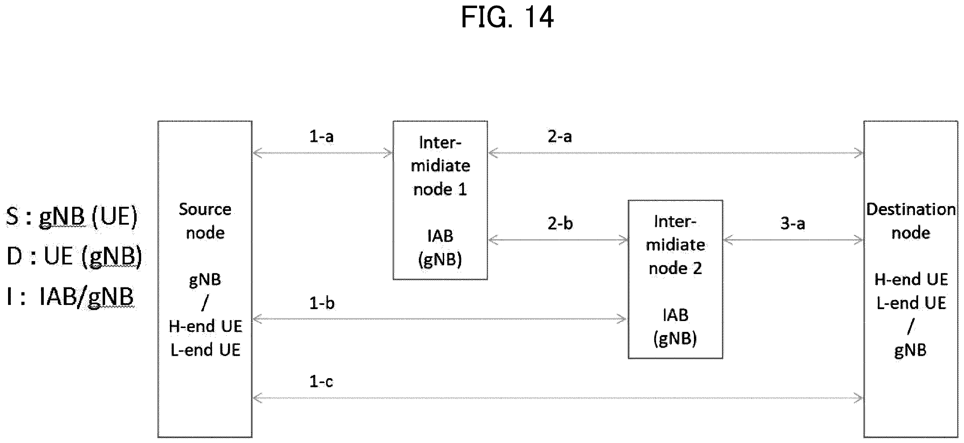

Fig. 14 is a diagram illustrating a configuration when the node types in option 2-1 and option 2-2 are S: gNB (UE), D: UE (gNB), and I: IAB/gNB. Here, S denotes a source node, D denotes a destination node, and I denotes an intermediate node. In this case, the signals and data in Fig. 13 corresponding to all the links in Fig. 14 are rewritable as illustrated in Fig. 10.

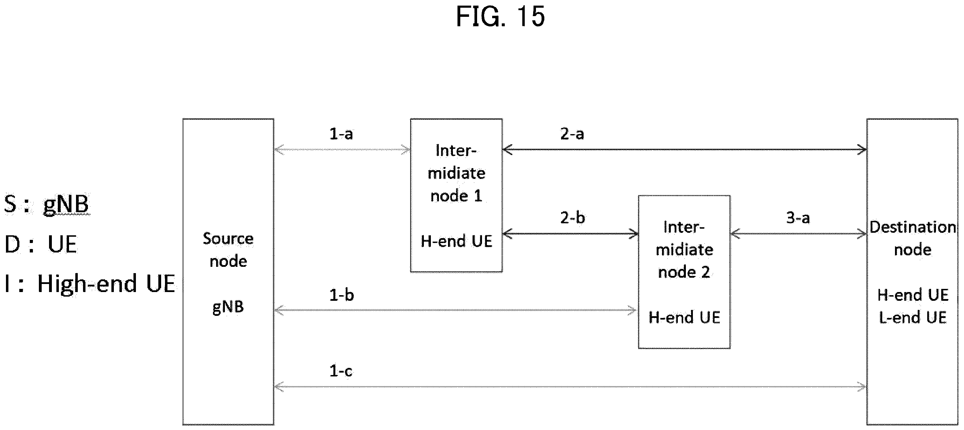

Fig. 15 is a diagram illustrating a configuration when the node types are S: gNB, D: UE, and I: high-end UE. In this case, part of the signals and data in Fig. 13 corresponding to the link in Fig. 15 are rewritable as illustrated in Fig. 11.

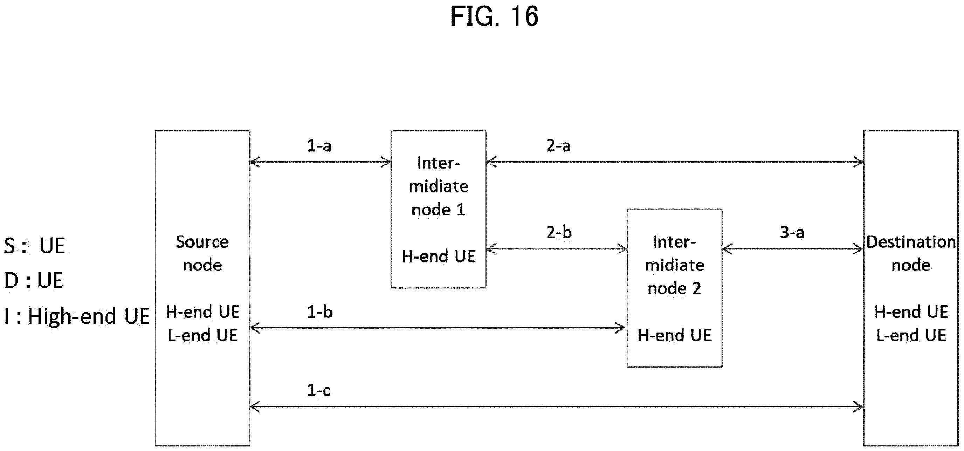

Fig. 16 illustrates a configuration when the node types are S: UE, D: UE, and I: high-end UE. In this case, the signals and data in Fig. 13 corresponding to the links in Fig. 16 are not rewritable as illustrated in Fig. 12.

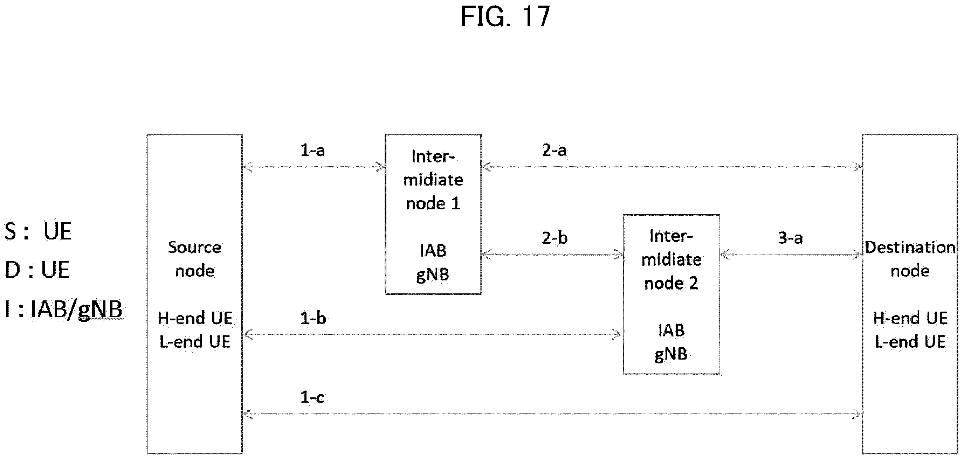

Fig. 17 illustrates a configuration when the node types are S: UE, D: UE, and I: IAB/gNB. In this case, the signals and data in Fig. 13 corresponding to the links in Fig. 17 are rewritable as illustrated in Fig. 10.

By configuring as described above, control methods and mechanisms are uniform in option 2-1 regardless of the function or type of the node to be connected, while they can be made different in option 2-2 depending on the function or type of the node to be connected.

### (3.3) Details of scenario 3

In the example of scenario 3, scenario 1 and scenario 2 are mixed.

As control target links, the following methods may be adopted.
Method 1: Node to node (each link)
   That is, each link between nodes is controlled.
Method 2: Source to destination (E2E)
   That is, multiple links configuring E2E are controlled.
Method 3: gNB to node
   Links between a gNB and nodes are controlled.

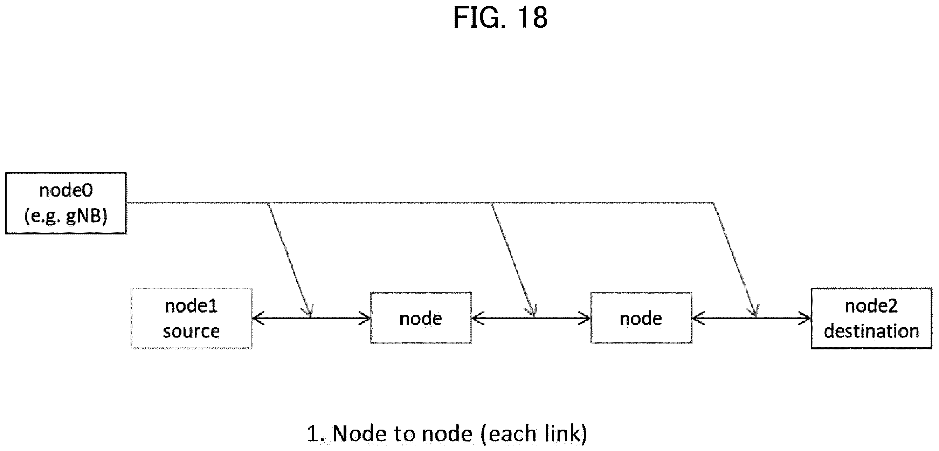

Here, Fig. 18 is a diagram illustrating a configuration example using method 1: node to node (each link). As illustrated in Fig. 18, a specific node (node 0) is configured to perform control for each node.

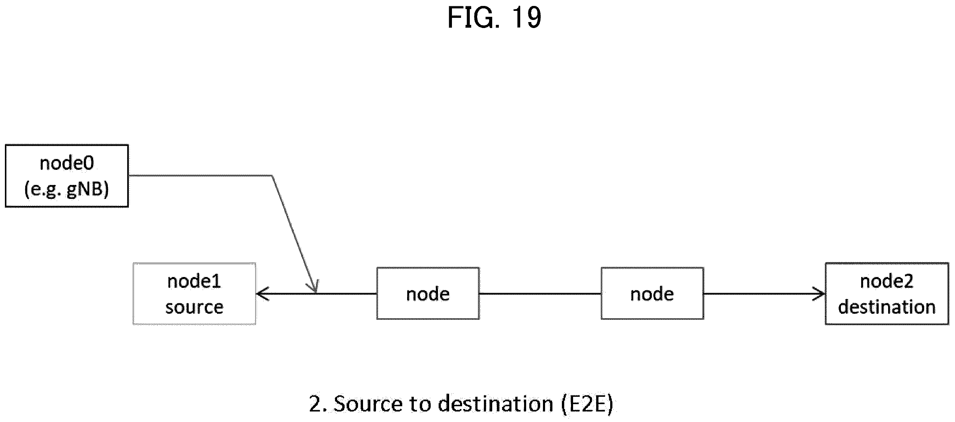

Fig. 19 is a diagram illustrating a configuration example using method 2: source to destination (E2E). As illustrated in Fig. 19, in this example, a specific node (node 0) performs uniform control of multiple links configuring E2E.

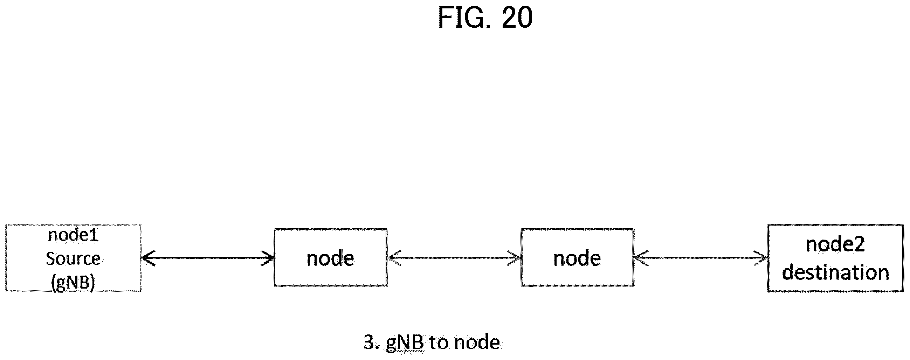

Fig. 20 is a diagram illustrating a configuration example using method 3: gNB to node. As illustrated in Fig. 20, in this example, a specific node (node 0) controls only a link between the node 1 source (gNB) and a node. That is, the specific node (node 0) controls only the left double-arrow link in the figure, not the center and left double-arrow links.

Note that at least one of the following may be adopted as a target of control by a core NW/base station and the like.
- Synchronization
   Inter-node and intra-node transmission/reception timing, and the like
- Connection type
   Connection type of node/E2E
- Routing
   With/without routing designation
- Node identification
   Assignment of an identifier to each node
- Resource allocation
   Resource allocation for a link between nodes

### (4)Action and effect

In the above-described embodiment, the following action and effect can be obtained. Specifically, the present embodiment includes a connection unit (NW IF unit 130) that is capable of connecting with multiple radio communication nodes (radio communication nodes 100) having the same or a different function or role, and a control unit (control unit 140) that controls connection performed by the connection unit (NW IF unit 130).

Therefore, multiple communication routes including an uplink with a higher link, a side link between peer nodes, and a downlink with a lower link can be used, and thus the radio links have a redundant configuration and reliability can be enhanced.

In the present embodiment, the control unit 140 enables connection control from another specific radio communication node 100, or enables connection control of all the other radio communication nodes by the radio communication node 100 of the control unit 140.

Thus, for example, connection control of other nodes such as a UE can be performed by a specific node such as a gNB, and a connection control relationship between radio communication nodes can be appropriately configured according to the node type or the like.

Also, in the present embodiment, the control unit 130 disables connection control from another specific radio communication node 100, or disables connection control of each of the other radio communication nodes by the radio communication node 100 of the control unit 130.

Thus, a connection control relationship between radio communication nodes can be appropriately configured according to the node type or the like, for example, by preventing a gNB from being subjected to connection control from a UE.

In the present embodiment, in the radio communication node, the above-described connection control method is uniform regardless of the node shape or node type, or differs depending on the node shape or node type.

Thus, a uniform connection control method can be used to make a simple configuration, while detailed configuration and control can be performed depending on the node shape or node type.

In this embodiment, the target of connection control is at least one of synchronization, connection type, identification, routing, and resource allocation.

Thus, detailed control can be performed in synchronization, connection type, identification, routing, resource allocation, and the like.

### (5) Other embodiments

The contents of the present invention have been described above along with examples, but the present invention is not limited to these descriptions, and it is obvious to those skilled in the art that various modifications and improvements are possible.

For example, the names parent node, IAB node, and child node were used in the above described embodiment, but the names may be different as long as a radio communication node configuration is adopted in which radio backhaul between radio communication nodes such as a gNB, and radio access with terminals are integrated. For example, they may be simply referred to as first and second nodes, or they may be referred to as higher node, lower node, relay node or intermediate node, and the like.

The radio communication node may also be simply referred to as a communication device or communication node, or may be read as a radio base station.

In the above-described embodiment, the terms of downlink (DL) and uplink (UL) were used, but other terms may be used. For example, these may be replaced or associated with terms such as forward link, reverse link, access link, and backhaul. Alternatively, terms such as first link, second link, first direction, and second direction may simply be used.

The block diagram (Fig. 3) used in the description of the above-described embodiment shows blocks in units of functions. Those functional blocks (components) can be realized by a desired combination of at least one of hardware and software. A realization method for each functional block is not particularly limited. That is, each functional block may be realized by using one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that makes a transmitting function work is called a transmitting unit or a transmitter. For any of the above, as described above, the realization method is not particularly limited.

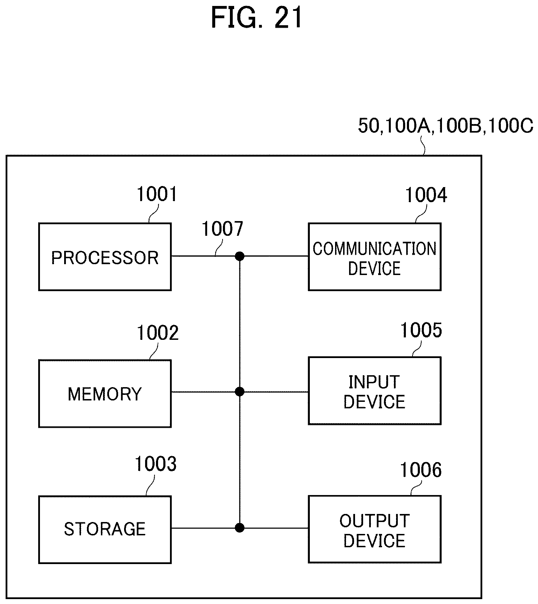

Further, the above-described CU 50 and radio communication node 100 may function as a computer that performs processing of a radio communication method of the present disclosure. FIG. 21 is a diagram showing an example of a hardware configuration of the device. As shown in FIG. 21, the device may be configured as a computer device including a processor 1001, a memory 1002, a storage 1003, a communication device 1004, an input device 1005, an output device 1006, a bus 1007, and the like.

Furthermore, in the following description, the term "device" can be substituted with circuit, device, unit, or the like. The hardware configuration of the device may include one or more devices shown in the figure or may not include some of the devices.

Each of the functional blocks of the device (see Fig. 3) is implemented by means of any of hardware elements of the computer device or a combination of the hardware elements. Fig. 21 illustrates an example of the hardware configuration of the CU 50 and the radio communication node 100.

Each function in the device is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 operates, for example, an operating system to control the entire computer. The processor 1001 may be configured with a Central Processing Unit (CPU) including interfaces with peripheral devices, control devices, arithmetic devices, registers, and the like.

Moreover, the processor 1001 reads a program (program code), a software module, data, and the like from at least one of the storage 1003 and the communication device 1004 into the memory 1002, and executes various processes according to these. As the program, a program causing the computer to execute at least part of the operation described in the above embodiment is used. Alternatively, various processes described above can be executed by one processor 1001 or can be executed simultaneously or sequentially by two or more processors 1001. The processor 1001 can be implemented by using one or more chips. Alternatively, the program may be transmitted from a network via a telecommunication line.

The memory 1002 is a computer readable recording medium and may be configured, for example, with at least one of a Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), and the like. The memory 1002 may store therein programs (program codes), software modules, and the like that can execute the method according to one embodiment of the present disclosure.

The storage 1003 is a computer readable recording medium. Examples of the storage 1003 include at least one of an optical disk such as Compact Disc ROM (CD-ROM), a hard disk drive, a flexible disk, a magneto-optical disk (for example, a compact disk, a digital versatile disk, Blu-ray (registered trademark) disk), a smart card, a flash memory (for example, a card, a stick, a key drive), a floppy (registered trademark) disk, a magnetic strip, and the like. The storage 1003 can be referred to as an auxiliary storage device. The recording medium can be, for example, a database including at least one of the memory 1002 and the storage 1003, a server, or other appropriate medium.

The communication device 1004 is hardware (transmission/reception device) capable of performing communication between computers via at least one of a wired network and a wireless network. The communication device 1004 is also referred to as, for example, a network device, a network controller, a network card, a communication module, and the like.

The communication device 1004 may include a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may have an integrated configuration (for example, a touch screen).

Also, the respective devices such as the processor 1001 and the memory 1002 are connected to each other with the bus 1007 for communicating information. The bus 1007 may be constituted by a single bus or may be constituted by different buses for each device-to-device.

Further, the device may be configured to include hardware such as a microprocessor, a Digital Signal Processor (DSP), an Application Specific Integrated Circuit (ASIC), a Programmable Logic Device (PLD), and a Field Programmable Gate Array (FPGA). Some or all of these functional blocks may be realized by means of this hardware. For example, the processor 1001 may be implemented by using at least one of the above-described items of hardware.

Further, notification of information is not limited to that in the aspect/embodiment described in the present disclosure, and may be performed by using other methods. For example, notification of information may be performed by physical layer signaling (for example, Downlink Control Information (DCI), Uplink Control Information (UCI)), higher layer signaling (for example, RRC signaling, Medium Access Control (MAC) signaling), broadcast information (Master Information Block (MIB), System Information Block (SIB)), other signals, or a combination thereof. The RRC signaling may also be referred to as an RRC message, for example, or may be an RRC Connection Setup message, an RRC Connection Reconfiguration message, or the like.

Each aspect/embodiment described in the present disclosure can be applied to at least one of Long Term Evolution (LTE), LTE-Advanced (LTE-A), SUPER 3G, IMT-Advanced, the 4th generation mobile communication system (4G), the 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), a system using any other appropriate system, and a next-generation system that is expanded based on these. Further, a plurality of systems may be combined (for example, a combination of at least one of LTE and LTE-A with 5G) and applied.

The order of the processing procedures, sequences, flowcharts, and the like of each aspect/embodiment described in the present disclosure may be exchanged as long as there is no contradiction. For example, the methods described in the present disclosure present the elements of the various steps by using an exemplary order and are not limited to the presented specific order.

The specific operation that is performed by a base station in the present disclosure may be performed by its higher node (upper node) in some cases. In a network constituted by one or more network nodes having a base station, it is obvious that the various operations performed for communication with the terminal may be performed by at least one of the base station and other network nodes other than the base station (for example, an MME, an S-GW, and the like may be considered, but there is not limited thereto). In the above, an example in which there is one network node other than the base station is explained; however, a combination of a plurality of other network nodes (for example, an MME and an S-GW) may be used.

Information and signals (information and the like) can be output from a higher layer (or lower layer) to a lower layer (or higher layer). These may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by using a value (0 or 1) represented by one bit, by truth-value (Boolean: true or false), or by comparison of numerical values (for example, comparison with a predetermined value).

Each of the aspects/embodiment described in the present disclosure may be used separately or in combination, or may be switched in accordance with the execution. In addition, notification of predetermined information (for example, notification of "is X") is not limited to being performed explicitly, and it may be performed implicitly (for example, without notifying the predetermined information).

Regardless of being referred to as software, firmware, middleware, microcode, hardware description language, or some other name, software should be interpreted broadly to mean instructions, an instruction set, code, a code segment, program code, a program, a subprogram, a software module, an application, a software application, a software package, a routine, a subroutine, an object, an executable file, an execution thread, a procedure, a function, and the like.

Further, software, instruction, information, and the like may be transmitted and received via a transmission medium. For example, when software is transmitted from a website, a server, or another remote source by using at least one of a wired technology (a coaxial cable, an optical fiber cable, a twisted pair cable, a Digital Subscriber Line (DSL), or the like) and a wireless technology (infrared light, microwave, or the like), then at least one of these wired and wireless technologies is included within the definition of the transmission medium.

Information, signals, or the like described in the present invention may be represented by using any of a variety of different technologies. For example, data, an instruction, a command, information, a signal, a bit, a symbol, a chip, or the like that may be mentioned throughout the above description may be represented by a voltage, a current, an electromagnetic wave, a magnetic field or magnetic particles, an optical field or photons, or a desired combination thereof.

It should be noted that the terms described in the present disclosure and terms necessary for understanding the present disclosure may be replaced with terms having the same or similar meanings. For example, at least one of a channel and a symbol may be a signal (signaling). A signal may also be a message. Further, a Component Carrier (CC) may be referred to as a carrier frequency, a cell, a frequency carrier, or the like.

The terms "system" and "network" used in the present disclosure can be used interchangeably.

Furthermore, information, parameters, and the like described in the present disclosure can be represented by an absolute value, can be represented by a relative value from a predetermined value, or can be represented by corresponding other information. For example, a radio resource can be indicated using an index.

Names used for the above parameters are not restrictive names in any respect. In addition, formulas and the like using these parameters may be different from those explicitly disclosed in the present disclosure. Since the various channels (for example, a PUCCH, a PDCCH, or the like) and information elements can be identified by any suitable names, the various names allocated to these various channels and information elements shall not be restricted in any way.

In the present disclosure, the terms such as "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. A base station may also be referred to with a term such as a macro cell, a small cell, a femtocell, or a pico cell.

A base station can accommodate one or more (for example, three) cells (also referred to as sectors). In a configuration in which a base station accommodates a plurality of cells, the entire coverage area of the base station can be divided into a plurality of smaller areas. In each of the smaller areas, a communication service can be provided by a base station subsystem (for example, a small base station for indoor use (remote radio head: RRH)).

The term "cell" or "sector" refers to a part or all of the coverage area of at least one of a base station and a base station subsystem that performs a communication service in this coverage.

In the present disclosure, the terms such as "mobile station (Mobile Station: MS)", "user terminal", "user equipment (User Equipment: UE)", and "terminal" can be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms by those skilled in the art.

At least one of a base station and a mobile station may be called a transmitting device, a receiving device, a communication device, or the like. Note that at least one of a base station and a mobile station may be a device mounted on a moving body, a moving body itself, or the like. The moving body may be a vehicle (for example, a car, an airplane, or the like), an unmanned moving body (a drone, a self-driving car, or the like), or a robot (manned type or unmanned type). At least one of a base station and a mobile station also includes a device that does not necessarily move during the communication operation. For example, at least one of a base station and a mobile station may be an Internet of Things (IoT) device such as a sensor.

Also, a base station in the present disclosure may be substituted with a mobile station (user terminal, hereinafter the same). For example, each aspect/embodiment of the present disclosure may be applied to a configuration in which communication between a base station and a mobile station is replaced with communication between a plurality of mobile stations (for example, this may be called Device-to-Device (D2D), Vehicle-to-Everything (V2X), or the like). In this case, the mobile station may have the function of a base station. In addition, words such as "uplink" and "downlink" may also be substituted with words corresponding to inter-terminal communication (for example, "side"). For example, an uplink channel, a downlink channel, or the like may be substituted with a side channel.

Similarly, the mobile station in the present disclosure may be read as a base station. In this case, the base station may have the function of the mobile station.

A radio frame may be composed of one or more frames in the time domain. Each of the one or more frames in the time domain may be referred to as a subframe. A subframe may be further composed of one or more slots in the time domain. The subframe may be a fixed time length (for example, 1 ms) independent of the numerology.

The numerology may be a communication parameter applied to at least one of transmission and reception of a certain signal or channel. The numerology may indicate at least one of, for example, subcarrier spacing (SCS), bandwidth, symbol length, cyclic prefix length, transmission time interval (TTI), the number of symbols per TTI, radio frame configuration, a specific filtering process performed by a transceiver in the frequency domain, a specific windowing process performed by a transceiver in the time domain, and the like.

A slot may be composed of one or more symbols (Orthogonal Frequency Division Multiplexing (OFDM)) symbols, Single Carrier Frequency Division Multiple Access (SC-FDMA) symbols, and the like) in the time domain. A slot may be a unit of time based on the numerology.

A slot may include a plurality of minislots. Each minislot may be composed of one or more symbols in the time domain. A minislot may be called a subslot. A minislot may be composed of fewer symbols than slots. A PDSCH (or PUSCH) transmitted in time units greater than the minislot may be referred to as a PDSCH (or PUSCH) mapping type A. A PDSCH (or PUSCH) transmitted using a minislot may be referred to as a PDSCH (or PUSCH) mapping type B.

Each of a radio frame, subframe, slot, minislot, and symbol represents a time unit for transmitting a signal. A radio frame, subframe, slot, minislot, and symbol may have respectively different names corresponding to them.

For example, one subframe may be called a transmission time interval (TTI), a plurality of consecutive subframes may be called a TTI, and one slot or one minislot may be called a TTI. That is, at least one of the subframe and TTI may be a subframe (1 ms) in the existing LTE, a period shorter than 1 ms (for example, 1-13 symbols), or a period longer than 1 ms. Note that, a unit representing TTI may be called a slot, a minislot, or the like instead of a subframe.

Here, a TTI refers to the minimum time unit of scheduling in radio communication, for example. For example, in the LTE system, the base station performs scheduling for allocating radio resources (frequency bandwidth, transmission power, and the like that can be used in each user terminal) to each user terminal in units of TTI. The definition of TTI is not limited to this.

A TTI may be a transmission time unit such as a channel-encoded data packet (transport block), a code block, or a code word, or may be a processing unit such as scheduling or link adaptation. When a TTI is given, a time interval (for example, the number of symbols) in which a transport block, a code block, a code word, and the like are actually mapped may be shorter than TTI.

When one slot or one minislot is called a TTI, one or more TTIs (that is, one or more slots or one or more minislots) may be the minimum time unit of the scheduling. The number of slots (minislot number) constituting the minimum time unit of the scheduling may be controlled.

A TTI having a time length of 1 ms may be referred to as an ordinary TTI (TTI in LTE Rel. 8-12), a normal TTI, a long TTI, an ordinary subframe, a normal subframe, a long subframe, a slot, and the like. A TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, and the like) may be read as a TTI having a time length exceeding 1 ms, and a short TTI (for example, shortened TTI) may be read as a TTI having a TTI length of less than a TTI length of a long TTI and a TTI length of 1 ms or more.

A resource block (RB) is a resource allocation unit in the time domain and the frequency domain, and may include one or more consecutive subcarriers in the frequency domain. The number of subcarriers included in the RB may be the same regardless of the numerology, and may be 12, for example. The number of subcarriers included in the RB may be determined based on the numerology.

Further, the time domain of an RB may include one or more symbols, and may have a length of 1 slot, 1 minislot, 1 subframe, or 1 TTI. Each TTI, subframe, or the like may be composed of one or more resource blocks.

Note that, one or more RBs may be called a physical resource block (PRB), a sub-carrier group (SCG), a resource element group (REG), a PRB pair, a RB pair, and the like.

A resource block may be configured by one or more resource elements (REs). For example, one RE may be a radio resource domain of one subcarrier and one symbol.

A bandwidth part (BWP) (which may be called a partial bandwidth or the like) may represent a subset of consecutive common resource blocks (RBs) for a certain numerology in a certain carrier. Here, the common RB may be specified by an index of the RB based on the common reference point of the carrier. A PRB may be defined in a certain BWP and numbered within that BWP.

A BWP may include a BWP for UL (UL BWP) and a BWP for DL (DL BWP). One or more BWPs may be set in one carrier for the UE.

At least one of the configured BWPs may be active, and the UE does not have to expect to transmit and receive predetermined signals/channels outside the active BWP. Note that "cell", "carrier", and the like in this disclosure may be read as "BWP".

The above-described structures such as a radio frame, a subframe, a slot, a minislot, and a symbol are merely examples. For example, structures such as the number of subframes included in a radio frame, the number of slots per subframe or radio frame, the number of minislots included in a slot, the number of symbols and RBs included in a slot or minislot, the number of subcarriers included in RBs, and the number of symbols included in a TTI, a symbol length, the cyclic prefix (CP) length, and the like can be changed in various manner.

The terms "connected", "coupled", or any variations thereof mean any direct or indirect connection or coupling between two or more elements, and can include that one or more intermediate elements are present between two elements that are "connected" or "coupled" to each other. The coupling or connection between the elements may be physical, logical, or a combination thereof. For example, "connection" may be substituted with "access". In the present disclosure, two elements can be "connected" or "coupled" to each other by using at least one of one or more wires, one or more cables, and one or more printed electrical connections, and as some non-limiting and non-exhaustive examples, by using electromagnetic energy having wavelengths in the radio frequency domain, a microwave region, and a light (both visible and invisible) region, and the like.

A reference signal may be abbreviated as RS and may be called a pilot according to applicable standards.

As used in the present disclosure, the phrase "based on" does not mean "based only on" unless explicitly stated otherwise. In other words, the phrase "based on" means both "based only on" and "based at least on".

"Means" in the configuration of each device above may be replaced with "unit", "circuit", "device", and the like.

Any reference to elements using a designation such as "first", "second", or the like used in the present disclosure generally does not limit the amount or order of those elements. Such designations can be used in the present disclosure as a convenient method to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive-OR.

Throughout the present disclosure, for example, during translation, if articles such as a, an, and the in English are added, the present disclosure may include that a noun following these articles is used in plural.

As used in this disclosure, the term "determining" may encompass a wide variety of actions. "determining" includes deeming that determining has been performed by, for example, judging, calculating, computing, processing, deriving, investigating, searching (looking up, search, inquiry) (for example, searching in a table, database, or another data structure), ascertaining, and the like. In addition, "determining" can include deeming that determining has been performed by receiving (for example, receiving information), transmitting (for example, transmitting information), inputting (input), outputting (output), access (accessing) (for example, accessing data in a memory), and the like. In addition, "determining" can include deeming that determining has been performed by resolving, selecting, choosing, establishing, comparing, and the like. That is, "determining" may include deeming that "determining" regarding some action has been performed. Moreover, "determining" may be read as "assuming", "expecting", "considering", and the like.

In the present disclosure, the wording "A and B are different" may mean "A and B are different from each other". It should be noted that the wording may mean "A and B are each different from C". Terms such as "separate", "couple", or the like may also be interpreted in the same manner as "different".

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Reference Signs List

10 Radio communication system
50 CU
100 Radio communication node
110 Radio transmission unit
120 Radio reception unit
130 NW IF unit
140 Control unit
1001 Processor
1002 Memory
1003 Storage
1004 Communication device
1005 Input device
1006 Output device
1007 Bus

## Claims

1. A radio communication node comprising:
a connection unit that is capable of connecting with a plurality of radio communication nodes having a same or different function or role; and
a control unit that controls connection performed by the connection unit.

2. The radio communication node according to claim 1, wherein the control unit enables connection control from another specific radio communication node, or enables connection control of all other radio communication nodes by the radio communication node of the control unit.

3. The radio communication node according to claim 1 or 2, wherein the control unit disables connection control from another specific radio communication node, or disables connection control of the radio communication node thereof from each of other radio communication nodes.

4. A radio communication node, wherein a connection control method according to claim 2 or 3 is uniform regardless of a node shape or node type, or differs depending on a node shape or node type.

5. A radio communication node, wherein a target of the connection control is at least one of synchronization, connection type, identification, routing, and resource allocation.

6. A radio communication method comprising:
a control step for controlling connection performed by a connection unit that is capable of connecting with multiple radio communication nodes having a same or different function or role; and
a connection step for performing a connection with another radio communication node through connection control in the control step.
